# EUROPEAN PATENT APPLICATION

(11) **EP 4 215 838 A1**
(43) Date of publication of application: **26.07.2023**
(21) Application number: 23000010.1
(22) Date of filing: 18.01.2023
(51) Int. Cl.: F24H 9/13, F24D 3/10, F16K 15/02, F16K 17/04, F24D 17/00

(54) **SAFETY DEVICE FOR A DOMESTIC WATER SUPPLY SYSTEM**

(30) Priority: 21.01.2022 IT 202200000830
(71) Applicant: DK Service a company organized under the Laws of Italy, 28021 Borgomanero (NO) (IT)
(72) Inventor: TIENGO, Carolina, 28021 Borgomanero (NO) (IT)
(74) Representative: Aprà, Mario

(57) **Abstract**

Safety device (5) for domestic water system (I) comprising a thermal storage power plant, hereinafter referred to as boiler (BO), characterized in that it comprises a rigid body (1), which comprises:
- a through cylindrical cavity (C1), which provides:
- at the bottom, a first chamber (A1) which has an external thread (11) for the hydraulic connection to the domestic water system (I), in particular with respect to a delivery pipe (T1) of the cold water of said water system (I), and laterally has an expulsion h through ole (12),
- in an intermediate position, a septum (13), in which a through supply hole (14) is provided;
- at the top, a second chamber (A2), axially aligned and hydraulically communicating with said first chamber (A1), through said supply hole (14), which has, inside, a thread (15) for the hydraulic connection to the boiler (BO), and has, laterally, a through hole (16), and internally threaded (in 17) for the application of a cap (3) for discharging the boiler, and again laterally has a through hole (18) internally threaded (in 19) for the application of a maximum pressure limiting device (5);

in that, moreover, it comprises:
- a non-return group (2), arranged in said second chamber (A2) and comprising first shutter means (24) and a corresponding gasket (26), which produce a hydraulic seal on cup means (7, 7a) and maintain normally closed said fluid passage (28);
- ring means (10, 10a, 10b) which provide a shoulder to elastic means (9, 43);
- cup means (7, 7a) with gaskets (6, 8), arranged movably and in a sealed condition in said first chamber (A1) and normally pushed in a sealed condition against said septum (13) by elastic means (9, 43) arranged between said cup means (7, 7a) and said ring means (10, 10a, 10b),

## Description

The present invention relates to a safety device of a domestic water supply system comprising a storage heating system.

The widespread use of small domestic water supply systems comprising a storage heating system, such as water heaters and the like, hereinafter for brevity called "boilers", has obliged manufacturers to make these boilers safe and efficient, as well as increasingly simple and economical, and above all easy to install. Today, anyone with a minimum knowledge of DIY can install a boiler, which can be found regularly stocked on the shelves of any DIY warehouse, as well as at more specialized retailers of heating and plumbing materials.

However, during installation of a boiler, which is a very simple operation, great care must be taken in particular to a device called safety valve, which is fitted in combination with the boiler and, more specifically, between the cold water delivery pipe and the boiler. The safety valve is usually purchased in combination with the boiler.

The safety valve is the device that limits the operating pressure of the boiler; this is because during operation of the boiler the water heated inside it cannot increase in volume and this creates an overpressure which, if not suitably limited, can cause the boiler to break and/or damage the domestic water supply system.

In substance, this safety valve consists of a loaded spring that exerts its action on a shutter. The increase in pressure of the boiler in excess of the calibration value causes the shutter to open and the excess fluid to escape through a specific discharge means of the valve.

The choice of safety valve, or rather the calibration of this valve, should conform to the operating pressure of the domestic water supply system in which this valve is fitted, but in practice it is quite impossible to conform this calibration to a specific system for two reasons.

The first is that very few people know the operating pressure of the domestic water supply system. In fact, measurement of this pressure requires the use of a gauge, which must be connected to the system. This measurement is only performed in cases of particular need. Except in the case of particular needs, this measurement is not known and, in any case, varies over the years due to updates or changes in the water supply network or in the context of the housing unit itself.

It should be noted that the operating pressure value of the domestic water supply system can vary from less than 1 bar for older dwellings, with obstructed pipes located at a height with a high hydraulic head (old buildings without autoclaves or homes on hills), and possibly also at a considerable distance from the aqueduct (with consequent losses of load), to up to 6-7 bar for dwellings in lower urban areas and therefore lower than or close to the aqueduct, which may even have no pressure regulator.

The other reason derives from the fact that the purchaser of a safety valve does not know its calibration pressure and in any case the resales, especially of cheap items, tend to have only one model in stock and not the of whole range.

The calibration pressure of the most widely used standard safety valve model, depending on the manufacturer, can vary from a calibration of 2 to 3 bar up to 10 to 11 bar. This calibration parameter is known by wholesalers that purchase a batch of safety valves from the manufacturer, explicitly requesting a given calibration for the batch. However, when the single safety valve reaches the retailer, this parameter is ignored as it is ignored also the operation of the valve itself.

In fact, the user is only aware of the fact that a safety valve must be fitted in combination with the boiler. The result of this is that, on the one hand, some dissatisfied users see water being discharged through the safety valve of their system even when the boiler is switched off and, on the other hand, other users do not see water discharged through the safety valve of their system, but are unintentionally and unnecessarily stressing the domestic water supply system, sending it into overpressure, which can cause the boiler to break down and also hidden leaks in the system. In fact, it has been proven that water supply systems that are subjected to higher pressure regimes are much more likely to have broken pipes and leaks from couplings and fittings.

Documents EP 0 586 340 A1, WO 2009/150495 A1 and EP 3 816 520 A1 disclose a safety device for domestic water system comprising a thermal storage power plant.

In particular, EP 0 586 340 A1 discloses a safety device for domestic water system comprising a thermal storage power plant, hereinafter referred to as boiler, wherein it comprises a rigid body, which comprises:
- a cavity, which provides:
   - at the bottom, a first chamber which has a thread for the hydraulic connection to the domestic water system, with respect to a delivery pipe of the cold water of said water system;
   - in an intermediate position, a septum, in which a through supply hole is provided;
   - at the top, a second chamber, axially aligned and hydraulically communicating with said first chamber, through said supply hole, which has a thread for the hydraulic connection to the boiler;
and, moreover, it comprises:
- ring means which provide shoulder to elastic means;
- cup means with gaskets, arranged movably and in a sealed condition and normally pushed in a sealed condition by elastic means arranged between said cup means and said ring means;
- a non-return group, comprising first shutter means and a corresponding gasket.

An object of the present invention is to provide a safety device of a domestic water supply system comprising a storage heating system, connected to a water distribution network, wherein calibration of the safety device takes place autonomously in relation to the pressure value of the water supply network and can adapt constantly in the case of variations of the water pressure of this network. Boiler and DHW (domestic hot water) circuit will only be solicited to the minimum necessary to ensure the functioning of the boiler, in particular to preserve the latter from premature breakages.

Another object of the present invention is to provide a domestic water supply system comprising a storage heating system which has a simplified structure, is safe and reliable to operate and requires limited technical and economic expenditure.

In view of these objects, the present invention provides a safety device of a domestic water supply system comprising a storage heating system, the essential features of which form the subject matter of claim 1.

Further advantageous features of the invention are described in the dependent claims. Features and advantages of the invention will be more apparent from the detailed description below of an example of embodiment, with reference to the accompanying drawing, which shows important details for the invention, and from the claims.

The features illustrated here are not necessarily drawn to scale and are represented so that the distinctive features according to the invention are clearly highlighted.

The various features can be produced individually or in any combination with one another, as variants of the invention.

In the drawing:
- figure 1 is a partial perspective view of the water supply system I and shows the arrangement of the subject-matter of the invention, i.e. the safety device S which will be installed between the boiler BO and the cold water delivery pipe T1;
- figure 2 is an overall perspective view of the safety device S;
- figure 3 is an exploded perspective view of the safety device S;
- figure 4 is an elevation view of the body 1 of the safety device S;
- figure 5 is a sectional view along the line V-V of figure 4, illustrating the body 1 of the safety device S;
- figure 6 is an overall elevation view of the safety device S;
- figure 7 is a sectional view along the line VII-VII of figure 6 of the safety device S;
- figures 8, 9 are perspective and elevation views, respectively, of a movable cup means 7 included in the safety device S;
- figures 10, 11 and 12 are an elevation view, a sectional view along the line XI-XI of figure 10 and an exploded perspective view, respectively, of the maximum pressure limiting device 5 included in the safety device S;
- figures 13, 14 with relative details 15 and 16 are sectional views, corresponding and similar to figure 7, illustrating the 3 operating states of the safety device S and respectively at rest, in overpressure condition Sp, with the flow F in motion;
- figure 17 with relative detail 18 is a sectional view similar to figure 7, illustrating the safety device S in the condition of maximum overpressure Spmax;
- figures 19, 20 are sectional views similar to figure 7, illustrating variants of embodiment of the safety device S;
- figure 21 is a partially exploded perspective view of another embodiment of the safety device S;
- figures 22, 23 are perspective and elevation views, respectively, of a variant of embodiment of the cup means 7 included in the safety device S;
- figure 24 is an elevation view of a variant of embodiment of the safety device:
- figure 25 is a sectional view along the line XXV-XXV of figure 24.

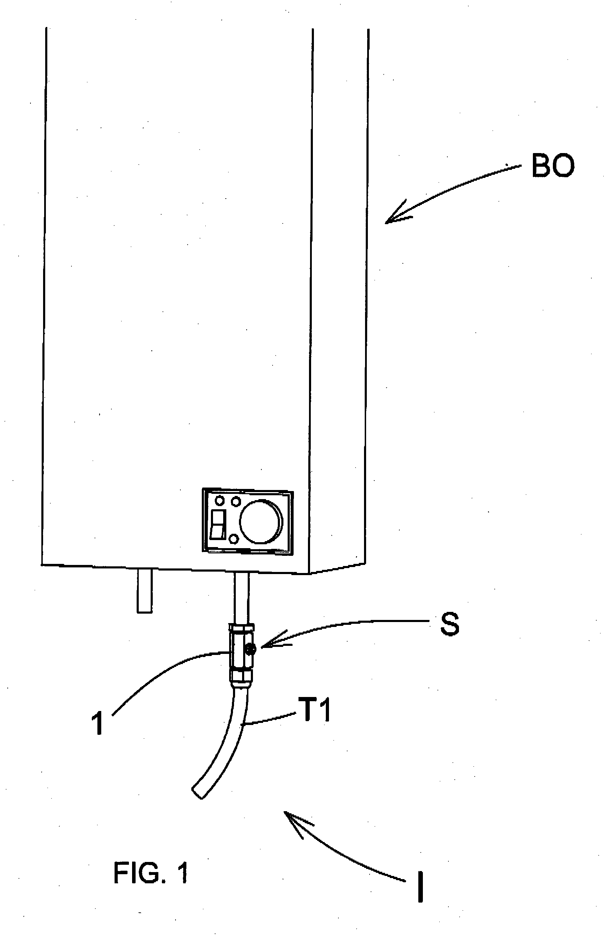

Referring to the drawing, I (figure 1) designates a domestic water system (only partially shown), connected to a water distribution network and comprising a thermal storage power plant BO (hereinafter referred to as boiler BO), which is connected through a safety device S.

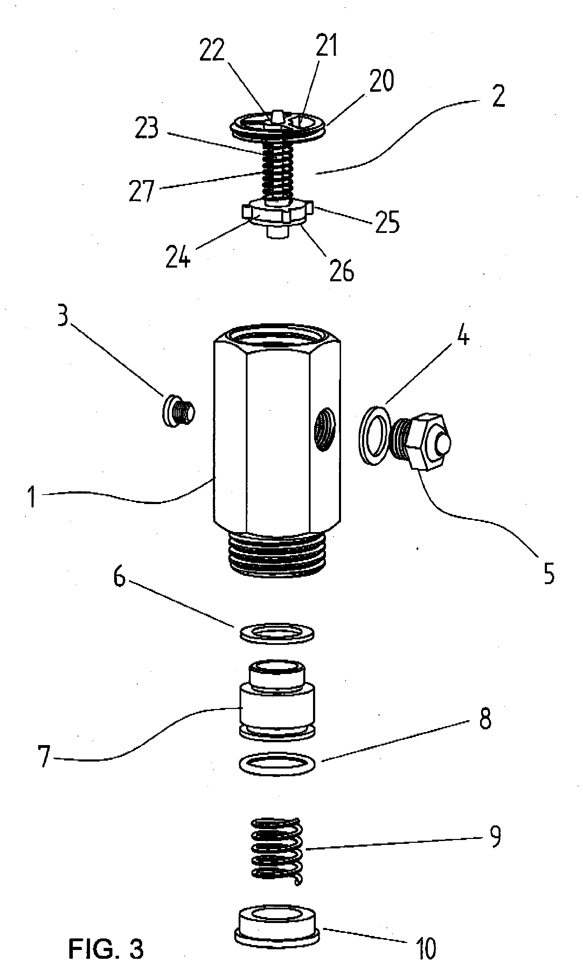

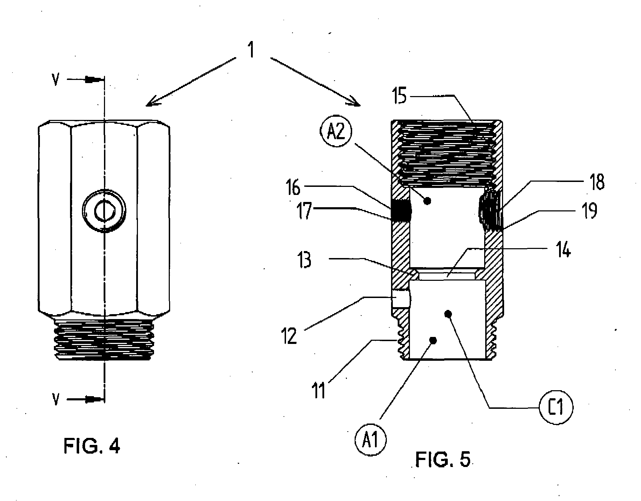

Said safety device S comprises a body 1, advantageously obtained from a hexagonal bar and which, according to figure 5, comprises:
- a through cylindrical cavity C1, which provides:
   - at the bottom, a first chamber A1 which has an external male thread 11 for the hydraulic connection to the domestic water system, in particular with respect to a delivery pipe T1 of the cold water of said water system I, and laterally has an expulsion hole 12,
   - in an intermediate position, a septum 13, in which a through supply hole 14 is provided;
   - at the top, a second chamber A2, axially aligned and hydraulically communicating with said first chamber A1, through said supply hole 14, which has, inside, a female thread 15 for the hydraulic connection to the boiler BO, and has, laterally, a through hole 16, and internally threaded in 17 for the application of a cap 3 for discharging the boiler (figure 3) and again laterally has a through hole 18 internally threaded in 19 for the application of a maximum pressure limiting device 5 (figure 3).

With reference to the above, the expressions "lower", "higher" are to be understood with respect to the direction of the flow of water adducted to the boiler BO through said safety device S connected with respect to the cold water delivery pipe T1 of the system I.

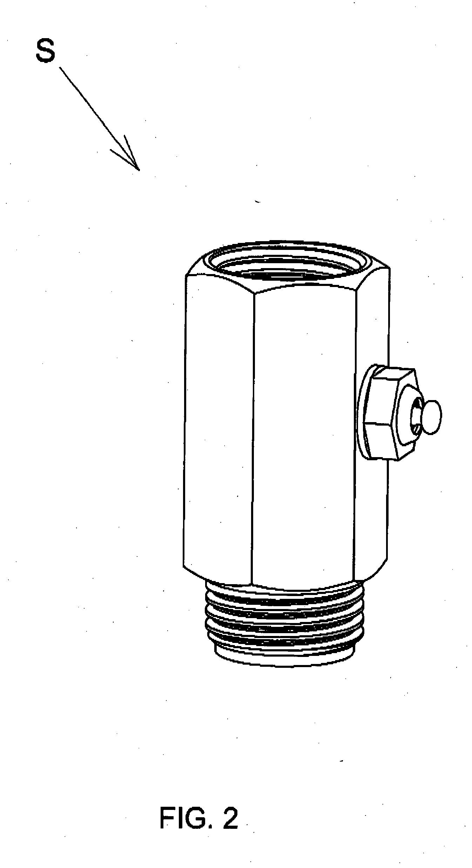

In figure 3, 2 denotes a non-return group, which has the purpose of preventing the hot water produced in the boiler BO from returning to the cold water circuit.

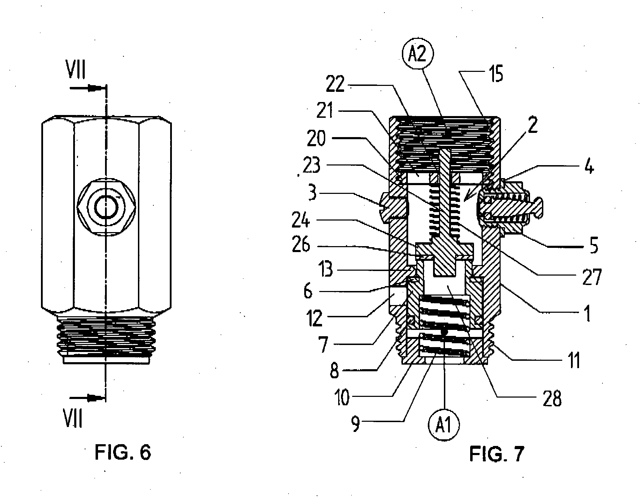

In particular, said non-return group 2 is arranged in said second chamber A2 and comprises, according to the present embodiment (figures 3 and 7), a ring nut 20 externally threaded and provided with openings 21 to allow the passage of fluid, a central hole 22 wherein an axial stem 23 of a shutter means 24 is inserted and guided, said shutter means being plate-shaped and is provided with centering tabs 25 and a gasket 26, while an helical slight preload spring 27 is arranged between said shutter means 24 and said ring nut 20, in a coaxial arrangement with respect to said stem 23.

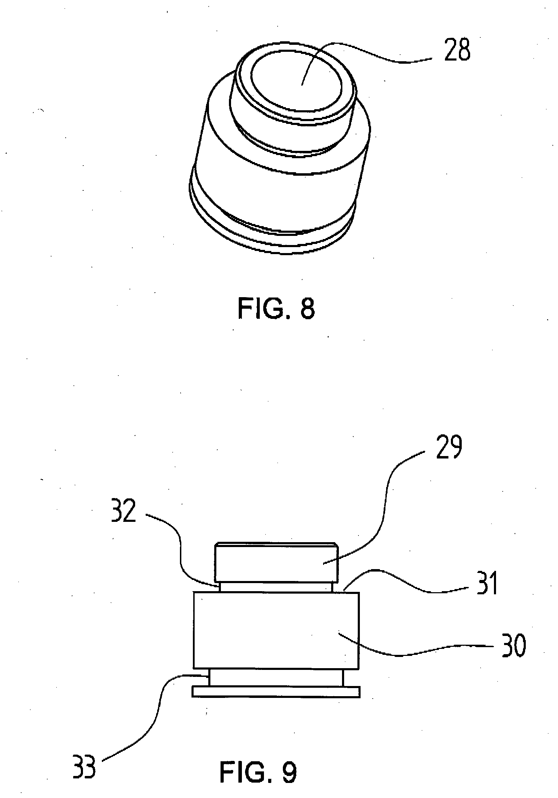

With reference to figures 3, 7, a cylindrical cup means 7 is inserted into the body 1 and is provided (according to figures 8 and 9) with a fluid passage 28, a cylindrical sector 29, a cylindrical sector 30 having a diameter greater than that of the sector 29, an abutment 31, a housing 32 for a gasket 6 (figure 3), a housing 33 for an O-ring 8 (figure 3), and said cup means 7 (according to figure 7) provides, through said O-ring 8, for the hydraulic seal in said chamber A1 and, being normally pushed by said spring 9, provides, through the gasket 6, also for the hydraulic seal on said septum 13.

The ring 10, forced into chamber A1, provides a shoulder to the spring 9, in order to said spring 9 applies the necessary preload on said cup means 7. This arrangement normally retains (in the absence of an overpressure Sp) the operating pressure P lying inside the safety device S, which otherwise would leak between the cup means 7 and the body 1, venting through the expulsion hole 12.

Again with reference to figure 7, said ring nut 20 of the non-return group 2 is screwed all the way to the internal thread 15 of the rigid body 1 and causes a slight preload of the spring 27 which, in turn, pushes down the plate of the shutter 24 keeping in adherence an annular gasket 26, coaxial and underlying said plate 24, producing a hydraulic seal on the edge of the cup means 7 and keeping the hole 28 of said cup means 7 normally closed, i.e. the passage of the flow from the chamber A2 to the chamber A1 .

The non-return group has the purpose of allowing flow F to pass from chamber A1 to chamber A2 but not vice versa; thanks to the spring 27 it closes automatically when the pressure in A2 is equal to or greater than the pressure present in A1. In this way the entire water system I of the domestic unit is thermally isolated from the DHW (domestic hot water) circuit avoiding hot water returns to the cold water circuit, but above all said water system I is protected from the effects of pressure generated by the volumetric expansion of the water heated in the boiler BO, which, if not suitably contained in the DHW (domestic hot water) circuit, affects the entire domestic water system, compromising the integrity and tightness of its most weak points.

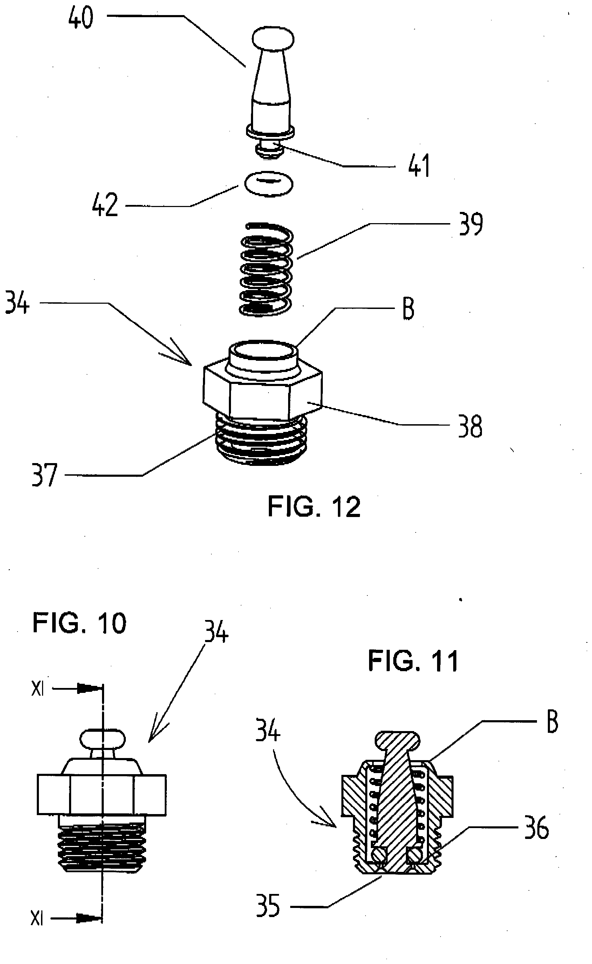

With reference to figures 3, 10, 11, 12 the maximum pressure limiting device 5 is illustrated, provided with a gasket 4 and hermetically engaged in the threaded hole 18 of the rigid body 1. Said maximum pressure limiting device 5 is substantially a miniaturized safety valve of so-called "moka" type, which is used, in addition to coffee makers, also in pressure cookers, domestic and professional kettles, steam generators, pneumatic systems, etc. Micro valves of this type are practically used in all liquid or gas pressure systems, whether hot or cold, in domestic and professional contexts, have a negligible cost and an absolute reliability of operation as their production chain is totally automated and is a 100% functionally certified. The volumetric discharge flow rate of these micro-devices is in the order of a few l/min, therefore much higher than the parameter required in the present invention, also because this micro-device does not have to directly expel the water which expands from the boiler BO, but it has only to expel from the non-return group 2 any leak that, if not detected, would send the entire domestic water system I into overpressure. Said maximum pressure limiting device 5 comprises a plug 34, internally hollow and having a discharge orifice 35 with relative internal sealing seat 36, and has on the outside a thread 37 and a hexagonal head 38. A spring 39 and a rod-shaped shutter 40, with a groove 41 and provided with gasket 42, are contained in the cavity of the plug 34. The operation of this device 5 is based on the action of the preloaded spring 39, which exerts its action on the shutter 40 which, thanks to the interposition of the gasket 42, makes a hermetic seal on the sealing seat 36, keeping the discharge orifice 35 normally closed. The sealing inside the cap 34 of the shutter 40, including the gasket 42 and the spring 39, is ensured by a edge B present on the free end of the cap 34, this edge B being first turned in a cylindrical shape, as shown in figure 12, and then bent back on itself with a riveting operation (figure 11).

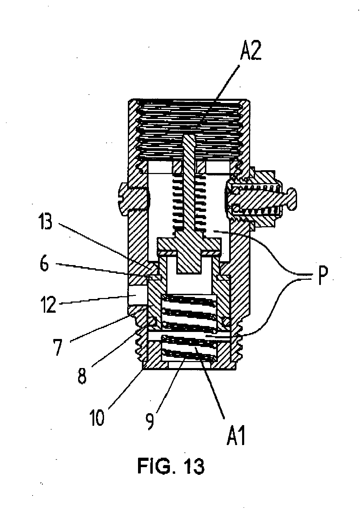

The safety device S is described below with reference to the self-calibrating sealing system, according to the present invention, by examining the three operating states according to figures 13, 14, 15, 16.

Figure 13 shows the behavior of the safety device S with the fluid F at rest; the cup means 7 pushed by the action of the spring 9 remains in contact with the septum 13 and through the gasket 6 it provides for the hydraulic seal of the liquid under internal pressure P lying inside the device S, which would otherwise leak and escape through the discharge hole 12.

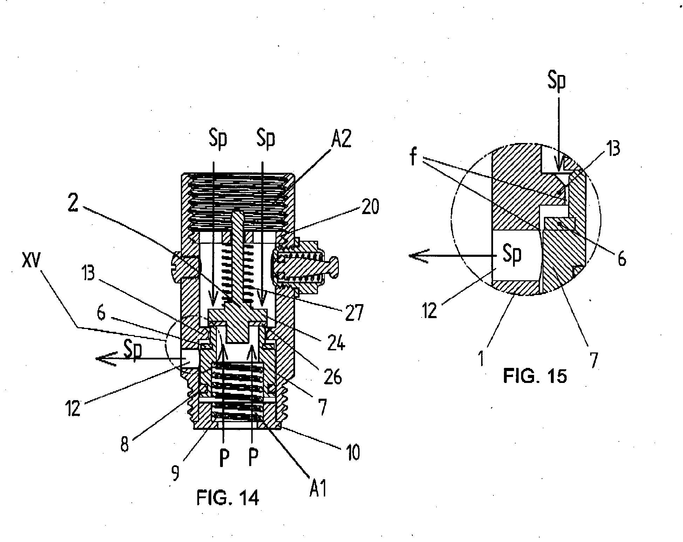

Figure 14 and the related detail 15 show the behavior of the safety device S when switching on the boiler BO; the water contained inside, heating up more or less quickly (depending on the type of energy used by the boiler BO) and not being able to expand naturally as it is enclosed in the DHW (domestic hot water) circuit will consequently increase in pressure generating an overpressure Sp greater than the ordinary system pressure P.

At this point, if the fluid subjected to an overpressure Sp does not find a natural way of expulsion, deriving from a withdrawal of hot water by the user, it will weigh on the entire DHW circuit and therefore also on the plate 24 of the non-return group 2, which thanks to the spring 27 closes automatically when the water pressure present in the second chamber A2, i.e. in the DHW circuit, is equal to or greater than the pressure in the first chamber A1, i.e. the part of the water system containing the water cold which feeds the boiler BO. Said plate 24, which makes an hydraulic seal on said cup 7 through the gasket 26 and is exposed to the overpressure Sp of the fluid F, will weigh on said cup means 7 which, overcoming the force of the spring 9, will move downwards releasing the hydraulic seal from the septum 13; consequently the volume of water which has determined the overpressure Sp, passing through the mechanical cracking f (figure 15), i.e. through the diametral coupling play between the cup means 7 and the body 1, can only discharge to the outside through the hole 12, advantageously connected to a drain pipe. The cup means will automatically close on septum 13 when the pressure in the DHW branch has returned to the pre-set values.

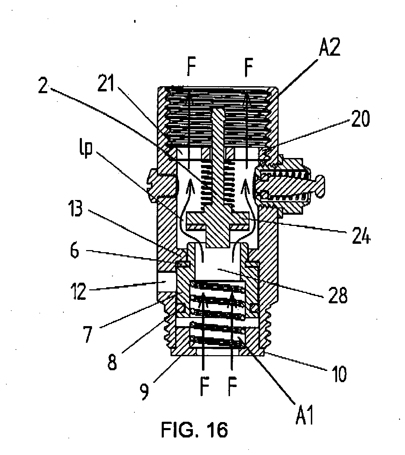

Figure 16 instead shows the behavior of the safety device S during the withdrawal of hot water by the user; at the drop in pressure in chamber A2, the spring 9 causes the cup means 7 to immediately close again against the septum 13, interrupting the discharge from the hole 12; the fluid F, which enters the first chamber A1 connected to the delivery pipe T1, reaches the passage hole 28 of the cup means 7, lifts the plate 24 of the non-return group 2, first passes through the passage lp present between the plate 24 and the chamber A2 and then, through the passages 21 of the ring nut 20, arrives at the second chamber A2 and from here to the boiler BO.

Therefore, finally and similarly to figure 13, in the absence of overpressure Sp, the spring 9 always ensures that the cup means 7 is kept in contact with the septum 13, avoiding hydraulic losses from the expulsion hole 12.

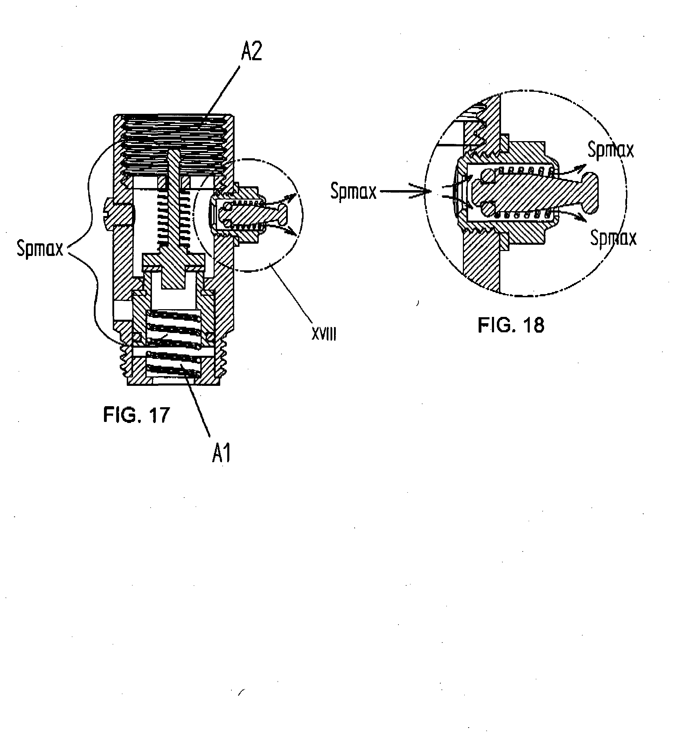

Finally, figure 17 and the related detail 18 show the safety device S in the malfunctioning condition of the non-return group 2, i.e. when it is no longer able to withholding the pressure from the chamber A2 to the chamber A1. In other words, A2 and A1 form a single environment at the same pressure and when this environment reaches a maximum overpressure Spmax at risk for the whole system, a protection intervenes, i.e. the maximum pressure limiting device 5 opens and releases the volume of water that caused the overpressure.

As can be seen from the above, the safety device S does not require specific calibration, as required by the known safety valves for water heaters present on the market, because regardless of the pressure value of the system I present in the housing unit, it will be able to discharge the overpressure Sp generated in the DHW (domestic hot water) circuit whenever the pressure present in A2, i.e. in the DHW circuit, is higher than the pressure present in A1, i.e. in the cold water circuit, which by definition represents the operating system pressure in the housing unit. The overpressure Sp will only have to overcome the force of the spring 9, which keeps the safety device S normally closed in the absence of overpressure Sp and in the event of water service interruptions, avoiding unnecessary emptying of the boiler BO.

Another fundamental characteristic, which distinguishes the safety device S from the known safety valves for water heaters, consists in the fact that, as illustrated in figures 17, 18, this device S is able to signaling to the user any malfunctions of the non-return group. In fact, it very often happens that the non-return group 2, previously described and universally adopted in all safety valves for water heaters, is damaged or stops closing properly for various reasons: sediments, limestone and rust present in the pipes, wear or hardening of the sealing gasket, breakage of the ring nut caused by excessive screwing of the nipple when assembling the boiler BO. In these conditions, the fluid under overpressure generated by the boiler, seeping through the aforementioned malfunctioning group, returns to the cold water branch T1, from which it arrived and which is at a lower pressure, having repercussions throughout the domestic system, with the serious risks of damage already mentioned in this description.

The known valve for water heaters will in any case trigger once its calibration value is reached but this discharge, with the known safety valves, will always and in any case be interpreted as the normal relief of the valve, due only to the overpressure present in the DHW circuit, and not due to the overpressure itself accidentally drawn throughout the system. This overpressure cannot even be absorbed by the network originating from the aqueduct, because the current hygienic-sanitary legislation on the subject of hydraulic installations provides that, upstream of each user station from the public drinking network, one or more non-return valves should be provided, to avoid contamination of the public water network caused by refluxes due precisely to back pressures coming from any user station, consisting of domestic water returns, but more dangerously from recirculation water from heating systems, having a high polluting and contaminating potential.

It therefore appears evident that any counter-pressure unchecked by malfunctioning safety valves of water heaters present inside a user station, which cannot be discharged or compensated by the network, in order to avoid damage to the domestic system, should be detected as soon as possible, in order to eliminate its cause.

Therefore, to this end, the present invention provides a control means of the system operating status, which is precisely the maximum pressure limiting device 5, protecting not only the whole system in time, but also monitoring for the entire domestic system I. In practice, when the user detects, according to figure 18, any dripping from the pressure limiter, he / she will know when it is time to replace the safety device S, because the non-return group, present inside it, no longer performs its function, as it is no longer able to withholding the water returns from the boiler BO; among other things, these returns can cause a serious risk of contamination by legionella, a dangerous bacterium capable of reproducing in water heaters inactive for short time, by means of the washbasins placed near the water heaters.

A further feature of the present invention is the extreme simplicity and production cost savings: given that the body 1 is preferably made of metal, this body 1 does not require a preformed pressing, and does not even require stencils and subsequent equipment for reworking on automatic machines. This body 1 is simply obtained by automatic turning from a semi-finished standard bar, with conventional equipment and with reduced processing times. Due to the manufacturing simplicity, the body 1 may be obtained also with a thermoplastic molding process, reducing production costs more radically. Another advantage of the safety device S consists in an improved, linear and modern design, and in an easy and immediate grip with the wrench during its tightening to the system.

The present invention can also be implemented, by way of example, with one or more of the variants of embodiment, indicated hereinafter.

### First variant of embodiment

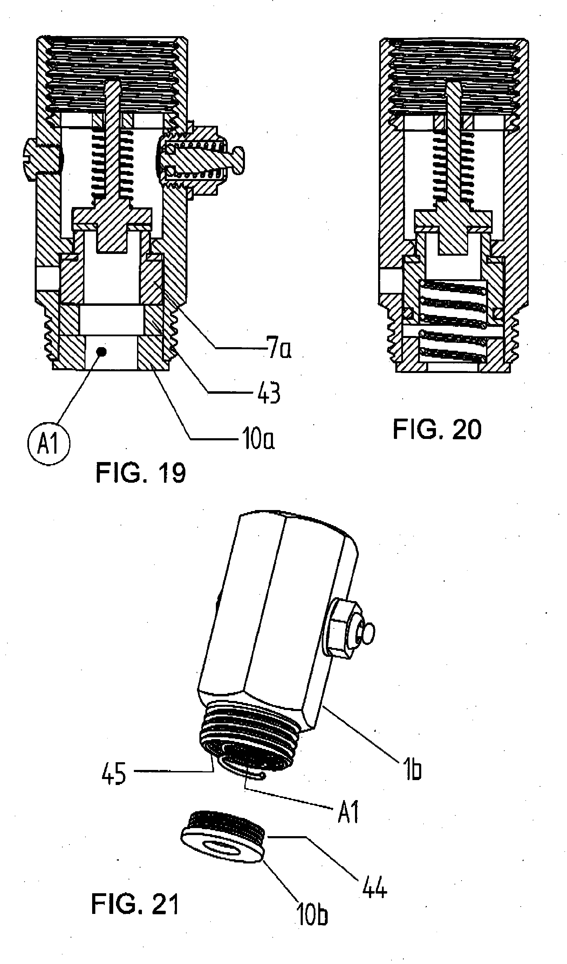

As an alternative to the spring 9, an elastomeric means 43 (or other elastic means) is provided according to figure 19; said elastomeric means 43 (or other elastic means) suitably preloaded by the ring 10a, in addition to the shock-absorbing function between the cup means 7a and said ring 10a, also provides for the hydraulic seal of the cup means 7a in the chamber A1 of the safety device S.

### Second variant of embodiment

The boiler emptying cap 3 and/or the maximum pressure limiting device 5 can/may be omitted, obtaining a simpler and even more economical configuration of the device of the invention, according to figure 20.

The maximum pressure limiting device 5 can be omitted in systems able to absorbing any overpressures such as, for example, hydraulic systems of craft and industrial business, which according to the law must be provided upstream with disconnecting devices able to release directly into the sewer system the overpressures created inside the system.

### Third variant of embodiment

Said ring 10 and said body 1 can be assembled by a screw thread; a ring 10b with an external threading 44 and a body 1b with an inner threading 45 in the chamber A1 are provided; the threading coupling has also the advantage of permitting to adjust the preload of the spring 9 by acting on the ring 10b and consequently adjusting the pressure value in A2 present in the DHW (domestic hot water) circuit with respect to the pressure A1 present in the cold water circuit.

### Fourth variant of embodiment

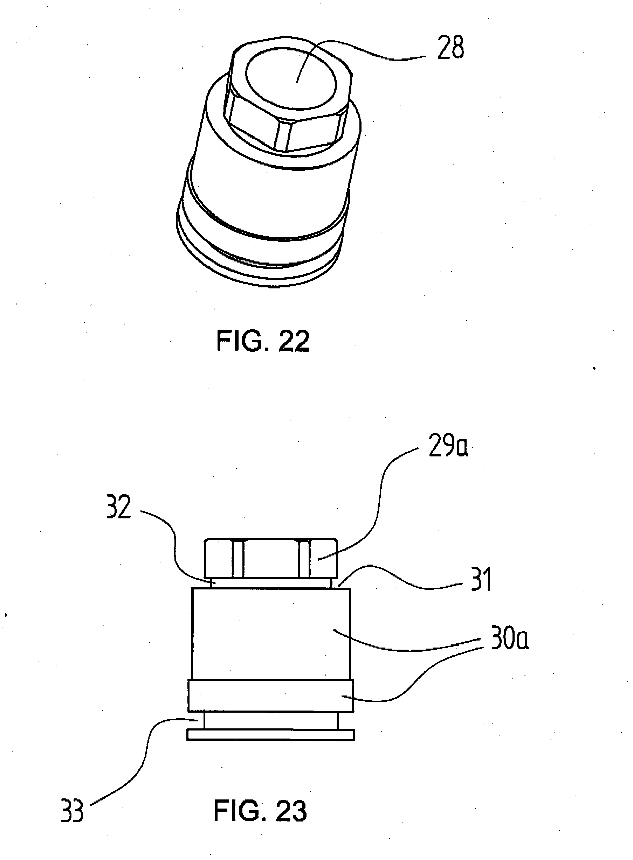

If there is a need for a large flow rate with a discharge overpressure Sp in a relatively short or instantaneous time, said cup means 7, according to figures 22 and 23, is provided with sections (29a and/or 30a) other than circular and/or with a further diversified diameter.

### Fifth variant of embodiment

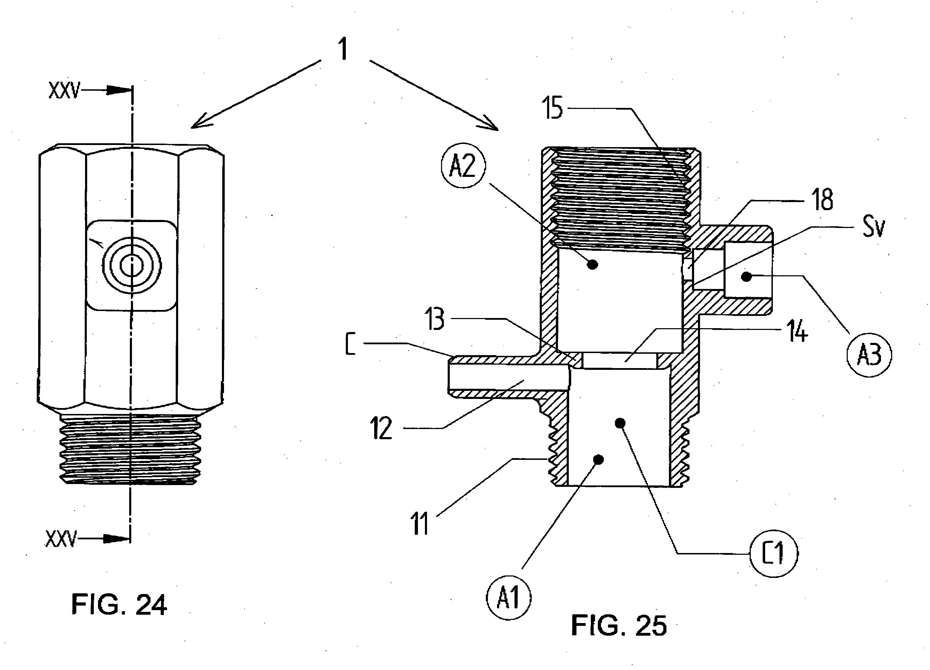

Reference is made to figure 25, that is a sectional view taken along line XXV-XXV of figure 24, illustrating a variant of the body 1 of the safety device S.

Said safety device S can have a body 1 preferably obtained from thermoplastic molding, drastically reducing the cost for its production.

In this case and according to figure 25 it comprises:
- a through cylindrical cavity C1 which provides:
   - at the bottom, a first chamber A1 which has an external male thread 11 for the hydraulic connection to the water system, in particular with respect to the cold water delivery pipe T1 of the water system I, and laterally has an expulsion hole 12 provided in a drain pipe C suitable for quickly setting up a quick coupling connection with the drain pipe;
   - in an intermediate position, a septum 13, in which a through supply hole 14 is provided;
   - at the top, a second chamber A2 axially aligned and communicating hydraulically with said first chamber A1, through said supply hole 14, and which has, inside, a female thread 15 for the hydraulic connection to the boiler BO, and
laterally, has an intake hole 18 communicating with a third chamber A3 with a valve seat Sv, on which a shutter works, the shutter being pushed by a spring which is in turn held by a pressure ring. The chamber A3, having inside said components, shutter, spring, and pressure ring, provides the function of maximum pressure limiting device of said safety device S.

With reference to the above, the expressions "lower", "higher" are to be understood with respect to the direction of the flow of water adducted to the boiler BO through said safety device S connected with respect to the cold water delivery pipe T1 of the system I.

### Summary of the invention

With reference to the foregoing description, the salient aspects of the present invention are summarized below.

### Claims

The safety device (S) for domestic water system (I) comprising a thermal storage power plant, hereinafter referred to as boiler (BO), characterized in that it comprises a rigid body (1), which comprises:
- a through cylindrical cavity (C1), which provides:
   - at the bottom, a first chamber (A1) which has an external thread (11) for the hydraulic connection to the domestic water system (I), with respect to a delivery pipe (T1) of the cold water of said water system (I), and laterally has an expulsion hole (12), passing through and advantageously threaded,
   - in an intermediate position, a septum (13), in which a through supply hole (14) is provided;
   - at the top, a second chamber (A2), axially aligned and hydraulically communicating with said first chamber (A1), through said supply hole (14), which has, inside, a thread (15) for the hydraulic connection to the boiler (BO), and has, laterally, a through hole (16), and internally threaded for the application of a cap (3) and again laterally has a through hole (18) internally threaded for the application of a maximum pressure limiting device (5);
   in that, moreover, it comprises:
   - ring means (10, 10a, 10b) which provide shoulder to elastic means (9, 43);
   - cup means (7, 7a) with gaskets (6, 8), and arranged movably and in a sealed condition in said first chamber (A1) and normally pushed in a sealed condition against said septum (13) by elastic means (9, 43) arranged between said cup means (7, 7a) and said ring means (10, 10a, 10b);
   - a non-return group (2), arranged in said second chamber (A2) and comprising first shutter means (24) and a corresponding gasket (26), which produce a hydraulic seal on a fluid passage (28) through said cup means (7, 7a).

In particular, said non-return group (2) is configured in such a way that, with said boiler (BO) in operation and with withdrawal of hot water, a flow (F) of cold water enters said first chamber (A1) of the cavity (C1) and raises said first shutter means (24), entering the boiler (BO) through said second chamber (A2); and
- in the absence of withdrawal of hot water and with cold water flow (F) at rest, said non-return group (2) automatically rests on said cup means (7, 7a) normally closing said fluid passage (28);
- in the absence of withdrawal of hot water and with cold water flow (F) at rest, said cup (7, 7a) normally rests on said septum (13) closing the passage towards a mechanical crack (f);
- when the pressure of the water present in said second chamber (A2) is equal to or greater than the pressure present in said first chamber (A1), said non-return group (2) does not allow hot water to be poured into said first chamber (A1) and in the cold water duct (T1);
- the overpressure (Sp) weighs on said first shutter means (24);
- said first shutter means (24) weigh on said cup means (7, 7a) and close said fluid passage (28) by means of the corresponding gasket (26);
- at a predetermined value of said overpressure (Sp), said cup means (7, 7a) pushed by said shutter means (24) open away from said septum (13), allowing the volume of water which determined said overpressure (Sp) to flow into said mechanical crack (f) communicating with said expulsion hole (12).

Furthermore, said non-return group (2) comprises a ring nut (20) provided with a central hole (22), wherein an axial stem (23) of said first shutter means (24) is inserted and guided, said shutter means being plate-shaped, and of the elastic means (27) arranged between said first shutter means (24) and said ring nut (20), wherein said first shutter means ( 24) are provided with centering tabs (25) and said ring nut (20) is provided with openings (21) to allow the passage of fluid, and wherein said ring nut (20) is screwed with respect to said internal thread (15) of the rigid body (1) and determines a slight preload of said elastic means (27), which push said first shutter means (24) downwards and keep a gasket (26) in adherence, producing a hydraulic seal on said means to cup (7, 7a), keeping said fluid passage (28) normally closed from the first chamber (A1) to the second chamber (A2).

Said safety device (S) comprises ring means (10, 10a, 10b) inserted in the chamber (A1) with forced coupling or by thread coupling, and that said ring means provide a shoulder to elastic means (9, 43).

Said safety device (S) comprises elastic means (9, 43) which provide to exert a thrust on said cup means (7, 7a).

In particular, said elastic means arranged between said cup (7, 7a) and said ring (10, 10a, 10b) are made of elastomeric material.

Said safety device (S) comprises cup means (7) comprising a fluid passage (28), a cylindrical sector (29), a cylindrical sector (30), an abutment (31), a housing (32) for gasket (6), a housing (33) for O-ring (8), and said cup means (7) are arranged movable in the chamber (A1) and provide, through said O-ring (8), for the hydraulic seal in said chamber (A1) and, being normally pushed by said elastic means (9, 43) and through the gasket (6), for the hydraulic seal on said septum (13).

In particular, said cup means (7, 7a) have sectors (29a, 30a) with a section other than circular and/or with a further diversified and/or variable diameter, providing to create a greater flow rate in said mechanical crack (f).

Said supply hole (14) of said body (1, 1b) has a section other than circular, providing for creating a greater flow rate in said mechanical crack (f).

Said rigid body (1) comprises, in said second chamber (A2), a through hole (18), internally threaded, and a maximum pressure limiting device (5) is connected to said rigid body (1) by screwing into said through hole (18).

Said safety device (S) comprises means for emptying said boiler (BO) comprising plug means (3).

Furthermore, the rigid body (1) is manufactured by thermoplastic molding and said maximum pressure limiting device (5) is embodied (buried) in the molded product, avoiding the operation of application of said maximum pressure limiting device (5) and relative gasket (4).

Furthermore, the rigid body (1) is manufactured by thermoplastic molding and said internally threaded through hole (16) and/or said internally threaded through hole (18) are manufactured by means of a threaded insert embodied (buried) in the molded product. Said maximum pressure limiting device (5) comprises a plug (34), hollow inside and having a discharge orifice (35) with relative internal sealing seat (36), and has on the outside a thread (37), engaged in the corresponding thread of said through hole (18), and a hexagonal head (38), and it comprises, in the cavity of said plug (34), a spring (39) and a rod-shaped shutter (40), with a groove (41) for a gasket (42).

Said elastic means (9, 43), arranged between said ring means (10, 10a, 10b) and said cup means (7, 7a) maintain, with the boiler (BO) off, said cup means (7, 7a) closed on said septum (13), and said elastic means (9, 43) are configured so that the value of the opening pressure of said cup means (7, 7a), with respect to said septum (13), corresponds to the value of the force generated by said elastic means (9, 43) against said cup means (7, 7a).

As it results from the foregoing, the present invention allows to achieve the objects set out in the introduction in a simple and effective way.

## Claims

1. Safety device (S) for domestic water system (I) comprising a thermal storage power plant, hereinafter referred to as boiler (BO), **characterized in that** it comprises a rigid body (1), which comprises:
- a through cylindrical cavity (C1), which provides:
- at the bottom, a first chamber (A1) which has an external thread (11) for the hydraulic connection to the domestic water system (I), with respect to a delivery pipe (T1) of the cold water of said water system (I), and laterally has an expulsion hole (12), passing through and advantageously threaded,
- in an intermediate position, a septum (13), in which a through supply hole (14) is provided;
- at the top, a second chamber (A2), axially aligned and hydraulically communicating with said first chamber (A1), through said supply hole (14), which has, inside, a thread (15) for the hydraulic connection to the boiler (BO), and has, laterally, a through hole (16), and internally threaded for the application of a cap (3) and again laterally has a through hole (18) internally threaded for the application of a maximum pressure limiting device (5);
**in that**, moreover, it comprises:
- ring means (10, 10a, 10b) which provide a shoulder to elastic means (9, 43);
- cup means (7, 7a) with gaskets (6, 8), and arranged movably and in a sealed condition in said first chamber (A1) and normally pushed in a sealed condition against said septum (13) by elastic means (9, 43) arranged between said cup means (7, 7a) and said ring means (10, 10a, 10b), in which said cup means (7, 7a) have a fluid passage (28) allowing fluid to pass through said cup means;
- a non-return group (2), arranged in said second chamber (A2) and comprising first shutter means (24) and a corresponding gasket (26), which produce a hydraulic seal on said fluid passage (28) through said cup means (7, 7a).

2. Safety device (S) according to claim 1, **characterized in that**:
- said non-return group (2) is configured in such a way that, with said boiler (BO) in operation and with withdrawal of hot water, a flow (F) of cold water enters said first chamber (A1) of the cavity (C1) and raises said first shutter means (24), entering the boiler (BO) through said second chamber (A2);
and also **in that**:
- in the absence of withdrawal of hot water and with cold water flow (F) at rest, said non-return group (2) automatically rests on said cup means (7, 7a) normally closing said fluid passage (28);
- in the absence of withdrawal of hot water and with cold water flow (F) at rest, said cup (7, 7a) normally rests on said septum (13) closing the passage towards a mechanical crack (f);
- when the pressure of the water present in said second chamber (A2) is equal to or greater than the pressure present in said first chamber (A1), said non-return group (2) does not allow hot water to be poured into said first chamber (A1) and in the cold water duct (T1);
- the overpressure (Sp) weighs on said first shutter means (24);
- said first shutter means (24) weigh on said cup means (7, 7a) and close said fluid passage (28) by means of the corresponding gasket (26);
- at a predetermined value of said overpressure (Sp), said cup means (7, 7a) pushed by said shutter means (24) open away from said septum (13), allowing the volume of water which determined said overpressure (Sp) to flow into said mechanical crack (f) communicating with said expulsion hole (12).

3. Safety device (S) according to one or more preceding claims, **characterized in that** said non-return group (2) comprises a ring nut (20) provided with a central hole (22), wherein an axial stem (23) of said first shutter means (24) is inserted and guided, said shutter means being plate-shaped, and of the elastic means (27) arranged between said first shutter means (24) and said ring nut (20), wherein said first shutter means (24) are provided with centering tabs (25) and said ring nut (20) is provided with openings (21) to allow the passage of fluid, and wherein said ring nut (20) is screwed with respect to said internal thread (15) of the rigid body (1) and determines a slight preload of said elastic means (27), which push said first shutter means (24) downwards and keep a gasket (26) in adherence, producing a hydraulic seal on said means to cup (7, 7a), keeping said fluid passage (28) normally closed from the first chamber (A1) to the second chamber (A2).

4. Safety device (S) according to one or more preceding claims, **characterized in that** it comprises ring means (10, 10a, 10b) inserted in the chamber (A1) with forced coupling or by thread coupling, and that said ring means provide a shoulder to elastic means (9, 43).

5. Safety device (S) according to one or more preceding claims, **characterized in that** it comprises elastic means (9, 43) which provide to exert a thrust on said cup means (7, 7a).

6. Safety device (S) according to one or more preceding claims, **characterized in that** said elastic means arranged between said cup (7, 7a) and said ring (10, 10a, 10b) are made of elastomeric material.

7. Safety device (S) according to one or more preceding claims, **characterized in that** it comprises cup means (7) comprising a fluid passage (28), a cylindrical sector (29), a cylindrical sector (30), an abutment (31), a housing (32) for gasket (6), a housing (33) for O-ring (8), and **in that** said cup means (7) are arranged movable in the chamber (A1) and provide, through said O-ring (8), for the hydraulic seal in said chamber (A1) and, being normally pushed by said elastic means (9, 43) and through the gasket (6), for the hydraulic seal on said septum (13).

8. Safety device (S) according to one or more preceding claims, **characterized in that** said cup means (7, 7a) have sectors (29a, 30a) with a section other than circular and/or with a further diversified and/or variable diameter, providing to create a greater flow rate in said mechanical crack (f).

9. Safety device (S) according to one or more preceding claims, **characterized in that** said supply hole (14) of said body (1, 1b) has a section other than circular, providing to create a greater flow rate in said mechanical crack (f).

10. Safety device (S) according to one or more preceding claims, **characterized in that** said rigid body (1) comprises, in said second chamber (A2), a through hole (18), internally threaded, and **in that** the maximum pressure limiting device (5) is connected to said rigid body (1) by screwing into said through hole (18).

11. Safety device (S) according to one or more preceding claims, **characterized in that** it comprises means for emptying said boiler (BO) comprising plug means (3).

12. Safety device (S) according to one or more preceding claims, **characterized in that** the rigid body (1) is manufactured by thermoplastic molding and said maximum pressure limiting device (5) is embodied (buried) in the molded product, avoiding the operation of application of said maximum pressure limiting device (5) and relative gasket (4).

13. Safety device (S) according to one or more preceding claims, **characterized in that** the rigid body (1) is manufactured by thermoplastic molding and said internally threaded through hole (16) and/or said internally threaded through hole (18) are manufactured by means of a threaded insert embodied (buried) in the molded product.

14. Safety device (S) according to one or more preceding claims, **characterized in that** said maximum pressure limiting device (5) comprises a plug (34), hollow inside and having a discharge orifice (35) with relative internal sealing seat (36), and has on the outside a thread (37), engaged in the corresponding thread of said through hole (18), and a hexagonal head (38), and it comprises, in the cavity of said plug (34), a spring (39) and a rod-shaped shutter (40), with a groove (41) for a gasket (42),

15. Safety device (S) according to one or more preceding claims, **characterized in that** said elastic means (9, 43), arranged between said ring means (10, 10a, 10b) and said cup means (7, 7a) maintain, with the boiler (BO) off, said cup means (7, 7a) closed on said septum (13), and **in that** said elastic means (9, 43) are configured so that the value of the opening pressure of said cup means (7, 7a), with respect to said septum (13), corresponds to the value of the force generated by said elastic means (9, 43) against said cup means (7, 7a).

16. Safety device (S) according to one or more preceding claims, **characterized in that** it comprises a body (1) which comprises:
- a through cylindrical cavity (C1) which provides:
- at the bottom, a first chamber (A1) which has an external male thread (11) for the hydraulic connection to the water system, in particular with respect to the cold water delivery pipe (T1) of the water system (I), and laterally has an expulsion hole (12) provided in a drain pipe (C) suitable for quickly setting up a quick coupling connection with the drain pipe;
- in an intermediate position, a septum (13), in which a through supply hole (14) is provided;
- at the top, a second chamber (A2) axially aligned and communicating hydraulically with said first chamber (A1), through said supply hole (14), and which has, inside, a female thread (15) for the hydraulic connection to the boiler (BO), and
laterally, has an intake hole (18) communicating with a third chamber (A3) with valve seat (Sv), on which a shutter works, the shutter being pushed by a spring which is in turn held by a pressure ring, so that said chamber (A3), having inside said components, shutter, spring, and pressure ring, provides the function of maximum pressure limiting device of said safety device (S).
